(19) Europäisches Patentamt
European Patent Office
Office européen des brevets

(11) EP 3 401 122 B1

(12) **EUROPEAN PATENT SPECIFICATION**

(45) Date of publication and mention of the grant of the patent:
**13.05.2020 Bulletin 2020/20**

(51) Int Cl.:
***B60C 1/00*** *(2006.01)* ***C08L 15/00*** *(2006.01)*

(21) Application number: **18170025.3**

(22) Date of filing: **30.04.2018**

(54) **TIRE TREAD AND TIRE**

REIFENLAUFFLÄCHE UND REIFEN

BANDE DE ROULEMENT ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2017 JP 2017093087**

(43) Date of publication of application:
**14.11.2018 Bulletin 2018/46**

(73) Proprietor: **Sumitomo Rubber Industries, Ltd.**
**Kobe-shi, Hyogo 651-0072 (JP)**

(72) Inventor: **MAEKAWA, Tetsuya**
**Kobe-shi, Hyogo 651-0072 (JP)**

(74) Representative: **TBK**
**Bavariaring 4-6**
**80336 München (DE)**

(56) References cited:
**US-A1- 2013 030 111**

- **DATABASE WPI Week 201550 Thomson Scientific, London, GB; AN 2015-38416A XP002784840, & JP 2015 124368 A (SUMITOMO RUBBER IND LTD) 6 July 2015 (2015-07-06)**
- **DATABASE WPI Week 201168 Thomson Scientific, London, GB; AN 2011-M54617 XP002784841, & JP 2011 195638 A (SUMITOMO RUBBER IND LTD) 6 October 2011 (2011-10-06)**
- **DATABASE WPI Week 201416 Thomson Scientific, London, GB; AN 2014-D09370 XP002784842, & JP 2014 034676 A (SUMITOMO RUBBER IND LTD) 24 February 2014 (2014-02-24)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 401 122 B1

## Description

### TECHNICAL FIELD

The present invention relates to a tire tread composed of a specified rubber composition and a tire having the tire tread.

### BACKGROUND OF THE INVENTION

Fuel efficiency is an important characteristic that is required for tires taking a role of transportation by a vehicle for the reason of increase in cost due to a soaring fuel price and environmental restriction. Further, durability is demanded for tires. In particular, since damage such as tip cut arises on a tire tread, durability (tip cut resistance) needs to be secured for a tire tread. Therefore, natural rubber allowing low heat build-up property and rubber strength to be obtained is used for a tire tread in many cases.

Further, regarding durability, abrasion resistance is also demanded, and for this purpose, abrasion resistance is intended to be improved by blending butadiene rubber to a rubber composition. However, when butadiene rubber is blended, while abrasion resistance tends to be improved, tip cut resistance is deteriorated, and it was difficult to improve the both characteristics.

For example, in JP 2000-344955 A, a method of using a diene rubber (modified rubber) modified with an organosilicon compound having amino group and alkoxy group was proposed as a method of improving fuel efficiency, but making abrasion resistance compatible with tip cut resistance was not considered.

JP 2015 - 124 368 relates to a pneumatic tire having at least one member selected from a group consisting of an undertread, sidewall, wing, ply, breaker, clinch apex, bead apex, sidewall reinforcing layer and inner liner, manufactured by using a rubber composition comprising a modified natural rubber that is highly purified and adjusted to have a pH of 2 to 7, carbon black and/or a white filler, and a silane coupling agent having a mercapto group.

### SUMMARY OF THE INVENTION

An object of the present invention is to provide a tire tread composed of a rubber composition being excellent in abrasion resistance and tip cut resistance and a tire having the tire tread.

The inventors of the present invention have made intensive studies, and as a result, have found that the above-mentioned problem can be solved by applying a specified silica and a highly reactive silane coupling agent to a rubber component comprising a modified natural rubber and a styrene-butadiene rubber, and have made further studies and thus have completed the present invention.

Namely, the present invention relates to:

[1] a tire tread composed of a rubber composition comprising:

100 parts by mass of a rubber component comprising 40 to 75% by mass, preferably 45 to 75% by mass, more preferably 50 to 75% by mass, further preferably 55 to 75% by mass of a modified natural rubber having a nitrogen content of 0.50% by mass or less, preferably 0.40% by mass or less, more preferably 0.30% by mass or less, further preferably 0.20% by mass or less, further preferably 0.10% by mass or less and 5 to 35% by mass, preferably 10 to 30% by mass, more preferably 15 to 30% by mass, further preferably 20 to 30% by mass of a styrene-butadiene rubber,

10 to 60 parts by mass, preferably 15 to 50 parts by mass, more preferably 20 to 40 parts by mass of silica having a nitrogen adsorption specific surface area of 180 $m^2/g$ or more, preferably 180 to 500 $m^2/g$, more preferably 190 to 500 $m^2/g$, further preferably 200 to 500 $m^2/g$, further preferably 200 to 300 $m^2/g$, and

3 to 15 parts by mass, preferably 4 to 12 parts by mass, more preferably 5 to 10 parts by mass of a silane coupling agent based on 100 parts by mass of silica, wherein the silane coupling agent being a compound comprising a bonding unit I represented by the following formula (1) and a bonding unit II represented by the following formula (2).

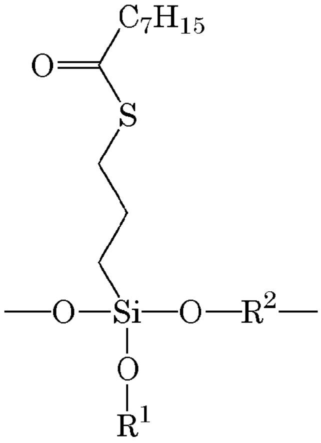

(1)

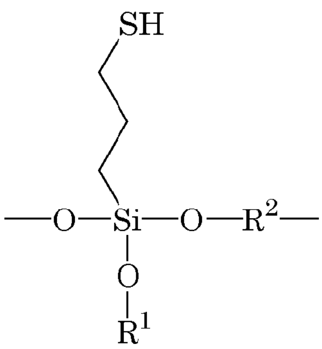

(2)

(In each of the formulae, $R^1$ represents hydrogen, halogen, a branched or non-branched alkyl group having 1 to 30, preferably 1 to 12 carbon atoms, a branched or non-branched alkenyl group having 2 to 30, preferably 2 to 12 carbon atoms, a branched or non-branched alkynyl group having 2 to 30, preferably 2 to 12 carbon atoms, or the alkyl group in which hydrogen at its terminal has been replaced by hydroxyl or carboxyl, $R^2$ represents a branched or non-branched alkylene group having 1 to 30, preferably 1 to 12 carbon atoms, a branched or non-branched alkenylene group having 2 to 30, preferably 2 to 12 carbon atoms, or a branched or non-branched alkynylene group having 2 to 30, preferably 2 to 12 carbon atoms, or $R^1$ and $R^2$ may form a ring structure.),

[2] the tire tread of the above [1], where the rubber component further comprises 0 to 45% by mass, preferably 3 to 45% by mass, more preferably 5 to 45% by mass, further preferably 5 to 40% by mass, further preferably 5 to 35% by mass, further preferably 5 to 30% by mass of a butadiene rubber,

[3] the tire tread of the above [1] or [2], where the rubber composition further comprises carbon black,

[4] the tire tread of the above [3], where a nitrogen adsorption specific surface area of the carbon black is 80 $m^2/g$ or more, preferably 80 to 300 $m^2/g$, more preferably 100 to 300 $m^2/g$, further preferably 120 to 300 $m^2/g$, further preferably 150 to 300 $m^2/g$, further preferably 175 to 250 $m^2/g$,

[5] the tire tread of any of the above [1] to [4], where the modified natural rubber is a saponified natural rubber,

[6] a tire having the tire tread of any of the above [1] to [5].

The tire tread and the tire having the tire tread of the present invention are excellent in abrasion resistance and tip cut resistance. Further, the tire tread and the tire having the tire tread of the present invention can be excellent also in fuel efficiency (low heat build up property).

DETAILED DESCRIPTION

The specified tire tread according to one embodiment of the present disclosure is featured by being composed of a rubber composition comprising 100 parts by mass of a rubber component comprising 40 to 75% by mass of a modified natural rubber having a nitrogen content of 0.50% by mass or less and 5 to 35% by mass of a styrene-butadiene rubber, 10 to 60 parts by mass of silica having a nitrogen adsorption specific surface area of 180 $m^2/g$ or more, and 3 to 15 parts by mass of a silane coupling agent based on 100 parts by mass of silica, wherein the silane coupling agent is a compound comprising the bonding unit I represented by the formula (1) and the bonding unit II represented by the formula (2).

While not intending to be bound in any way by theory, in the present disclosure, it can be considered that silica is acceleratedly distributed, in a rubber component comprising a natural rubber (NR) and a styrene-butadiene rubber (SBR), into an NR phase being a main polymer not only into an SBR phase in which silica is usually easy to be maldistributed by previously eliminating impurities from NR and making its purity high and using a highly reactive silane coupling agent in order to enhance reactivity of the silane coupling agent with the NR, and as a result, the whole rubber composition is reinforced uniformly and abrasion resistance and tip cut resistance are enhanced.

<Rubber component>

The rubber component comprises a specific modified natural rubber and a styrene-butadiene rubber.

(Modified natural rubber)

The modified natural rubber is a natural rubber from which natural component, mainly protein, other than a natural polyisoprenoid component contained in a natural rubber latex is reduced or removed (preferably a natural rubber from which impurities such as phospholipid and gel content also have been removed). A structure of natural rubber particles contained in a natural rubber latex is such that isoprenoid component is coated with impurity components. It is conjectured that by removing impurities on the surfaces of the natural rubber particles, the structure of the isoprenoid component changes and an interaction with compounding agents also changes, and as a result, effects of reducing energy loss and improving durability are obtained. Further, by removing impurities from the natural rubber latex, odors peculiar to natural rubber can also be reduced.

A modifying method is not limited, and known methods such as saponification treatment, enzyme treatment, and mechanical treatments such as ultrasonic treatment and centrifuging treatment can be used. Among these, saponification treatment is preferable from the viewpoint of production efficiency, cost and dispersibility of a white filler.

Examples of the natural rubber latex include a raw latex (field latex) collected by tapping of Hevea brasiliensis (Para rubber tree), a concentrated latex (refined latex) obtained by subjecting raw latex to concentration by a centrifuge separation method or a creaming method, a high ammonia latex obtained by adding ammonia by a usual method, an LATZ latex obtained by stabilization using zinc oxide, TMTD (tetramethylthiuram disulfide) and ammonia and the like. Among these, use of a field latex is preferable for the reason that modification by controlling a pH value is easy.

A content of a rubber component (solid rubber content) in the natural rubber latex is preferably 5 to 40% by mass, more preferably 10 to 30% by mass from the viewpoint of a stirring efficiency and the like.

Examples of the method of saponification treatment include those described in JP 2010-138359 A and JP 2010-174169 A. The saponification treatment can be carried out by adding a basic compound and a surfactant as required to a natural rubber latex and allowing a mixture to stand at a predetermined temperature for a given period of time, and stirring may be conducted according to necessity.

The basic compound is not limited particularly, and from a point of capability of removing protein and the like, a basic inorganic compound is suitable. Examples of the basic inorganic compound include metal hydroxides such as alkali metal hydroxide and alkali-earth metal hydroxide; metal carbonates such as alkali metal carbonate and alkali-earth metal carbonate; metal hydrogencarbonate such as alkali metal hydrogencarbonate; metal phosphate such as alkali metal phosphate; metal acetate such as alkali metal acetate; metal hydride such as alkali metal hydride; ammonia and the like.

Examples of the alkali metal hydroxide include lithium hydroxide, sodium hydroxide, potassium hydroxide and the like. Examples of the alkali-earth metal hydroxide include magnesium hydroxide, calcium hydroxide, barium hydroxide and the like. Examples of the alkali metal carbonate include lithium carbonate, sodium carbonate, potassium carbonate and the like. Examples of the alkali-earth metal carbonate include magnesium carbonate, calcium carbonate, barium carbonate and the like. Examples of the alkali metal hydrogencarbonate include lithium bicarbonate, sodium bicarbonate, potassium bicarbonate and the like. Examples of the alkali metal phosphate include sodium phosphate, sodium hydrogen phosphate and the like. Examples of the alkali metal acetate include sodium acetate, potassium acetate and the like. Examples of the alkali metal hydride include sodium hydride, potassium hydride and the like. Among these, from the viewpoint of saponification efficiency and ease of treatment, metal hydroxides, metal carbonates, metal hydrogencarbonates, metal phosphates and ammonia are preferable, and sodium hydroxide and potassium hydroxide which are alkali metal hydroxides are further preferable. These basic compounds may be used alone or may be used in combination of two or more thereof.

The surfactant is not limited particularly, and examples thereof include known anionic surfactants such as a polyoxyethylene alkyl ether sulfate, nonionic surfactants, amphoteric surfactants and the like. From the viewpoint that saponification can be carried out satisfactorily without coagulation of a rubber, anionic surfactants such as a polyoxyethylene alkyl ether sulfate are suitable. It is noted that in the saponification treatment, adding amounts of the basic compound and the surfactant, a saponification temperature and a saponification time may be set appropriately.

A coagulation drying step is a step of coagulating a highly purified product obtained in a modification step and thereafter drying a coagulated product to obtain a modified natural rubber. It can be considered that since impurities on the surfaces of the natural rubber particles have been removed in the modification step, a rubber composition comprising the natural rubber obtained in the coagulation drying step is excellent in rubber properties.

A coagulation method is not limited particularly, and examples thereof include a method of adding an acid such as formic acid, acetic acid or sulfuric acid to adjust a pH value thereof to be 4 to 7 and further adding a high-molecular flocculant as required, followed by stirring, or the like. By the coagulation, a rubber of the modified product is aggregated, thereby enabling a coagulated rubber to be obtained.

A drying method is not limited particularly, and the drying can be carried out using a usual dryer which is used in a drying step of a usual method of preparing natural rubber, for example, TSR, such as a trolley dryer, a vacuum dryer, an air dryer or a drum dryer.

It is preferable that the drying is carried out after cleaning of the obtained coagulated rubber. A cleaning method is not limited particularly as far as it is a means for enabling impurities contained in the whole rubber to be removed sufficiently, and there are, for example, a method of subjecting to centrifugation after diluting and cleaning a rubber with water, a method of allowing to stand to float rubber and eliminating only an aqueous phase to take out a rubber. Further, if the cleaning is carried out after treatment of the obtained coagulated rubber with a basic compound, impurities confined in the rubber at the time of coagulation can be re-dissolved and then cleaned and thus, the strongly adhered impurities in the coagulated rubber can be removed.

A nitrogen content of the modified natural rubber is 0.50% by mass or less. When the nitrogen content is within this range, an effect of the disclosure can be exhibited. The nitrogen content is preferably 0.40% by mass or less, more preferably 0.30% by mass or less, further preferably 0.20% by mass or less, further preferably 0.10% by mass or less. The nitrogen content can be measured by a conventional method, for example, a Kjeldahl method or the like. Nitrogen is derived from protein. It is noted that a lower limit of the nitrogen content is preferably as small as possible, and is, for example, 0.06% by mass or 0.01% by mass is considered to be small sufficiently.

It is preferable that a phosphorous content of the modified natural rubber is 200 ppm or less. When the phosphorous content is within this range, rubber properties such as fuel efficiency tend to be improved. The phosphorous content is preferably 150 ppm or less, more preferably 100 ppm or less. Here, the phosphorous content can be measured by a conventional method, for example, an ICP spectrometry (inductively coupled plasma spectrometry). Phosphorous is derived from phospholipid (a phosphorous compound).

A gel content of the modified natural rubber is preferably 20% by mass or less. When the gel content is within this range, rubber properties such as fuel efficiency tend to be improved. The gel content is more preferably 10% by mass or less, further preferably 7% by mass or less. The gel content means a value of gel content rate measured as an insoluble matter to toluene which is a non-polar solvent, and hereinafter may be called simply "a gel content" or "a gel portion". A measuring method of the content rate of the gel portion is as mentioned below. First, a natural rubber sample is dipped in dehydrated toluene, followed by allowing to stand in a light-shielded dark place for one week. Thereafter, the toluene solution is subjected to 30-minute centrifuging at $1.3 \times 10^5$ rpm to separate into an insoluble gel portion and a portion soluble in toluene. Methanol is added to the insoluble gel portion for solidification, followed by drying. The gel content is obtained from a ratio of mass of the gel portion to a mass of the starting sample.

A content of the modified natural rubber in the rubber component is 40 to 75% by mass. If the content of the modified natural rubber deviates from this range, there is a tendency that an effect of the disclosure is not exhibited sufficiently. The content of the modified natural rubber is preferably 45% by mass or more, more preferably 50% by mass or more. On the other hand, the content of the modified natural rubber is preferably 70% by mass or less, more preferably 65% by mass or less, further preferably 60% by mass or less.

(SBR)

SBR is not limited particularly, and examples thereof include an un-modified emulsion-polymerized styrene-butadiene rubber (E-SBR) and an un-modified solution-polymerized styrene-butadiene rubber (S-SBR) and modified SBRs thereof such as a modified emulsion-polymerized styrene-butadiene rubber (modified E-SBR) and a modified solution-polymerized styrene-butadiene rubber (modified S-SBR). Further, there are an oil-extended type SBR having flexibility adjusted by adding an extender oil thereto and a non-extending type SBR in which an extender oil is not added, and either of them can be used.

Among these SBRs, it is preferable to use modified SBRs. The modified SBR is not limited particularly as far as it is a styrene-butadiene rubber having a styrene content of 15 to 50% by mass, a weight-average molecular weight (Mw) of 200,000 or more and a terminal-modifying ratio of 30 to 100%, and either of a solution-polymerized SBR (S-SBR) and an emulsion-polymerized SBR (E-SBR) can be used. Further, not only terminal-modified SBRs but also main chain-modified SBRs and SBRs coupled with tin or a silicon compound (a condensate, one having a branched structure, and the like) can also be used. A terminal-modifying group is not limited particularly as far as it is a group having affinity

for silica, and examples of a group to be introduced include alkoxysilyl, amino, hydroxyl, glycidyl, amide, carboxyl, ether, thiol, cyano, hydrocarbon, isocyanate, imino, imidazole, urea, carbonyl, oxycarbonyl, sulfide, disulfide, sulfonyl, sulfinyl, thiocarbonyl, ammonium, imide, hydrazo, azo, diazo, nitrile, pyridyl, alkoxy, oxy, epoxy, metallic atoms such as tin and titanium and the like. It is noted that these functional groups may have a substituent group. In particular, primary, secondary and tertiary amino (especially glycidyl amino), epoxy, hydroxyl, alkoxy (preferably one having 1 to 6 carbon atoms), alkoxysilyl (preferably one having 1 to 6 carbon atoms) and hydrocarbon radical are preferable. The modified SBR can be prepared by, for example, a method described in JP 2014-019841 A.

A styrene content of the SBR is preferably not less than 5.0% by mass, more preferably not less than 10.0% by mass, for the reason that sufficient grip performance and rubber strength can be obtained. Further, the styrene content of the SBR is preferably not more than 60.0% by mass, more preferably not more than 50.0% by mass, from the viewpoint of fuel efficiency. It is noted that the styrene content of the SBR as used herein is calculated in accordance with $^1$H-NMR measurement.

A vinyl content of the SBR (an amount of 1,2-bond butadiene unit) is preferably not less than 10.0%, more preferably not less than 15.0%, for the reason that sufficient grip performance and rubber strength can be obtained. On the other hand, from the viewpoint of fuel efficiency, the vinyl content of the SBR is preferably not more than 65.0%, more preferably not more than 60.0 %. It is noted that the vinyl content of the SBR as used herein can be determined by an infrared absorption spectrum analysis method.

A content of the SBR in the rubber component is 5 to 35% by mass. If the content of the SBR deviates from this range, there is a tendency that an effect of the disclosure is not exhibited sufficiently. The content of the SBR is preferably 10% by mass or more, more preferably 15% by mass or more, further preferably 20% by mass or more. On the other hand, the content of the SBR is preferably 30% by mass or less. It is noted that when an oil-extended type SBR is used as the SBR, the content of SBR in the rubber component is a content of SBR itself as a solid content contained in the oil-extended type SBR.

(Other rubber components)

Examples of other rubber components include un-modified natural rubber (NR), epoxidized natural rubber (ENR), isoprene rubber (IR), butadiene rubber (BR), styrene-isoprene rubber (SIR), styrene-isoprene-butadiene rubber (SIBR), ethylene-propylene-diene rubber (EPDM), chloroprene rubber (CR), acrylonitrile-butadiene rubber (NBR) and the like. Among these, use of BR is preferable for the reason that abrasion resistance, low temperature property and flex crack resistance are excellent. One or more rubbers can be used as the other rubber components.

Any of BRs which are commonly used in a field concerned can be used suitably as the BR, and a high cis BR having a cis content (a cis-1,4 bond content) of not less than 90.0% is preferable. The cis content of the BR is more preferably not less than 95.0%. It is noted that the cis content as used herein is a value measured by an infrared absorption spectrum analysis method.

For the reason that an interaction with a filler becomes stronger and fuel efficiency is excellent, terminal- and/or main chain-modified BRs and modified BRs coupled with tin or a silicon compound (a condensate, one having a branched structure, and the like) can also be used as the BR. Further, from the viewpoint of a reaction with silica, it is possible to use terminal- and/or main chain-modified BRs modified with a functional group having an interaction with silica, in particular modified BRs having at least one selected from the group consisting of silyl, amino, amide, hydroxyl and epoxy.

When the rubber component comprises the BR, a content of the BR in the rubber component may be not less than 0% by mass, preferably 3% by mass or more, more preferably 5% by mass or more from the viewpoint of abrasion resistance. Further, the content of the BR in the rubber component is preferably 45% by mass or less, more preferably 40% by mass or less, more preferably 35% by mass or less, further preferably 30% by mass or less from the viewpoint of abrasion resistance.

<Filler>

A specified silica is used as a filler, and further other fillers may be used. For example, any of fillers such as carbon black, calcium carbonate and clay which are generally used in a field concerned can be used as the other fillers. When a filler other than silica is used, carbon black is preferable.

(Silica)

Silica is not limited particularly, and examples thereof include silica prepared by a dry method (anhydrous silica) and silica prepared by a wet method (hydrous silica), and hydrous silica prepared by a wet method is preferred for the reason that many silanol groups are contained.

A nitrogen adsorption specific surface area ($N_2SA$) of silica is not less than 180 $m^2/g$. When the $N_2SA$ of silica

is less than 180 $m^2/g$, there is a tendency that an effect of the present disclosure is not exhibited sufficiently. The $N_2SA$ is preferably not less than 190 $m^2/g$, more preferably not less than 200 $m^2/g$. On the other hand, the $N_2SA$ is preferably not more than 500 $m^2/g$, more preferably not more than 300 $m^2/g$ from the viewpoint of fuel efficiency and processability. Herein, the $N_2SA$ of silica is a value measured by a BET method in accordance with ASTM D3037-81.

As mentioned above, silica having a large $N_2SA$ is known as a fine particle silica and control of dispersion of the silica is generally difficult. However, in this embodiment, as mentioned above, uneven distribution of the silica in the rubber composition can be inhibited and excellent rubber performances can be exhibited in good balance.

The content of silica is 10 to 60 parts by mass based on 100 parts by mass of the rubber component. When the content of silica is less than 10 parts by mass, there is a tendency that low heat build-up property is deteriorated, and when the content of silica is more than 60 parts by mass, there is a tendency that sufficient dispersion of silica becomes difficult. The content of silica is preferably not less than 15 parts by mass, more preferably not less than 20 parts by mass. On the other hand, the content of silica is preferably not more than 50 parts by mass, more preferably not more than 40 parts by mass

(Carbon black)

Carbon black is not limited particularly, and GPF, FEF, HAF, ISAF, SAF and the like can be used alone or can be used in combination of two or more thereof. In particular, it is preferable to use so-called fine particle carbon black having a large nitrogen adsorption specific surface area ($N_2SA$) from the viewpoint of exhibiting an effect of the disclosure sufficiently.

A nitrogen adsorption specific surface area ($N_2SA$) of the carbon black is preferably not less than 80 $m^2/g$, more preferably not less than 100 $m^2/g$, further preferably not less than 120 $m^2/g$, further preferably not less than 150 $m^2/g$, further preferably not less than 175 $m^2/g$. Further, the $N_2SA$ is preferably not more than 300 $m^2/g$, more preferably not more than 250 $m^2/g$. It is noted that the $N_2SA$ of the carbon black is measured in accordance with JIS K6217-2, Method A.

The content of the carbon black is preferably not less than 1 part by mass, more preferably not less than 10 parts by mass based on 100 parts by mass of the rubber component. On the other hand, the content of the carbon black is preferably not more than 100 parts by mass, more preferably not more than 70 parts by mass. When the content of the carbon black is within the above-mentioned range, good fuel efficiency and abrasion resistance can be obtained.

(Content of fillers)

The content of the whole fillers including the silica is preferably 30 to 150 parts by mass based on 100 parts by mass of the rubber component. When the content is within the above-mentioned range, there is a tendency that an effect of the disclosure is exhibited sufficiently. The content of the fillers is preferably not less than 40 parts by mass, more preferably not less than 50 parts by mass, further preferably not less than 60 parts by mass. On the other hand, the content of the fillers is preferably not more than 120 parts by mass, more preferably not more than 100 parts by mass, further preferably not more than 90 parts by mass.

<Silane coupling agent>

The silane coupling agent is a compound comprising a bonding unit I represented by the following formula (1) and a bonding unit II represented by the following formula (2). By compounding the silane coupling agent comprising the bonding unit I and the bonding unit II, fuel efficiency and abrasion resistance can be improved while securing good processability.

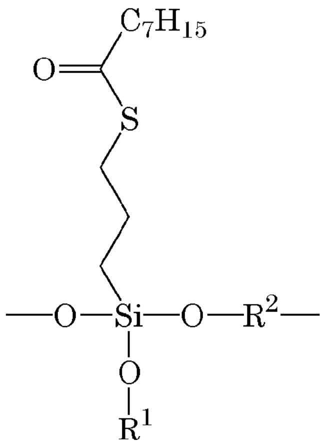

(1)

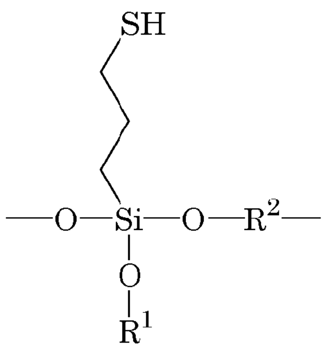

(2)

(In each of the formulae, $R^1$ represents hydrogen, halogen, a branched or non-branched alkyl group having 1 to 30 carbon atoms, a branched or non-branched alkenyl group having 2 to 30 carbon atoms, a branched or non-branched alkynyl group having 2 to 30 carbon atoms, or the alkyl group in which hydrogen at its terminal has been replaced by hydroxyl or carboxyl, $R^2$ represents a branched or non-branched alkylene group having 1 to 30 carbon atoms, a branched or non-branched alkenylene group having 2 to 30 carbon atoms, or a branched or non-branched alkynylene group having 2 to 30 carbon atoms, or $R^1$ and $R^2$ may form a ring structure.)

The compound comprising the bonding unit I represented by the formula (1) and the bonding unit II represented by the formula (2) inhibits increase in a viscosity during the processing as compared with a polysulfide silane such as bis-(3-triethoxysilylpropyl) tetrasulfide. It is considered that this is because the sulfide portion of the bonding unit I is a C-S-C bond and therefore, is thermally stable as compared with tetrasulfide and disulfide, thereby suppressing increase in a Mooney viscosity.

Further, a scorching time is inhibited as compared with a mercapto silane such as 3-mercaptopropyltrimethoxysilane. It is considered that this is because while the bonding unit II has a mercaptosilane structure, since a $-C_7H_{15}$ portion of the bonding unit I covers a -SH group of the bonding unit II, a reaction with a polymer hardly occurs and scorch (rubber burning) is hardly generated.

From a point that an effect of the disclosure is obtained satisfactorily, in the silane coupling agent having the above-mentioned structure, a content of the bonding unit I is preferably not less than 30% by mole, more preferably not less than 50% by mole, and preferably not more than 99% by mole, more preferably not more than 90% by mole. Further, a content of the bonding unit II is preferably not less than 1% by mole, more preferably not less than 5% by mole, further preferably not less than 10% by mole, and preferably not more than 70% by mole, more preferably not more than 65% by mole, further preferably not more than 55% by mole. Further, a total content of the bonding unit I and the bonding unit II is preferably not less than 95% by mole, more preferably not less than 98% by mole, further preferably 100% by mole. The contents of the bonding unit I and the bonding unit II includes those for the case where the bonding unit I and the bonding unit II are positioned at the terminals of the silane coupling agent. A mode of the bonding unit I and the bonding unit II being positioned at the terminals of the silane coupling agent is not limited particularly, and may be such that units corresponding to the formulae (1) and (2) representing the bonding units I and II are formed.

Examples of the halogen of $R^1$ include chlorine, bromine, fluorine and the like.

Examples of the branched or non-branched alkyl group having 1 to 30 carbon atoms of $R^1$ include methyl, ethyl, n-propyl, isopropyl, n-butyl, iso-butyl, sec-butyl, tert-butyl, pentyl, hexyl, heptyl, 2-ethylhexyl, octyl, nonyl, decyl and the like. The number of carbon atoms of the alkyl group is preferably 1 to 12.

Examples of the branched or non-branched alkenyl group having 2 to 30 carbon atoms of $R^1$ include vinyl, 1-propenyl, 2-propenyl, 1-butenyl, 2-butenyl, 1-pentenyl, 2-pentenyl, 1-hexenyl, 2-hexenyl, 1-octenyl and the like. The number of carbon atoms of the alkenyl group is preferably 2 to 12.

Examples of the branched or non-branched alkynyl group having 2 to 30 carbon atoms of $R^1$ include ethynyl, propynyl, butynyl, pentynyl, hexynyl, heptynyl, octynyl, nonynyl, decynyl, undecynyl, dodecynyl and the like. The number of carbon atoms of the alkynyl group is preferably 2 to 12.

Examples of the branched or non-branched alkylene group having 1 to 30 carbon atoms of $R^2$ include ethylene, propylene, butylene, pentylene, hexylene, heptylene, octylene, nonylene, decylene, undecylene, dodecylene, tridecylene, tetradecylene, pentadecylene, hexadecylene, heptadecylene, octadecylene and the like. The number of carbon atoms of the alkylene group is preferably 1 to 12.

Examples of the branched or non-branched alkenylene group having 2 to 30 carbon atoms of $R^2$ include vinylene, 1-propenylene, 2-propenylene, 1-butenylene, 2-butenylene, 1-pentenylene, 2-pentenylene, 1-hexenylene, 2-hexenylene, 1-octenylene and the like. The number of carbon atoms of the alkenylene group is preferably 2 to 12.

Examples of the branched or non-branched alkynylene group having 2 to 30 carbon atoms of $R^2$ include ethynylene, propynylene, butynylene, pentynylene, hexynylene, heptynylene, octynylene, nonynylene, decynylene, undecynylene, dodecynylene and the like. The number of carbon atoms of the alkynylene group is preferably 2 to 12.

It is preferable that in the silane coupling agent having the above-mentioned structure, the number of repetitions (x+y) being total of the number of repetitions (x) of the bonding unit I and the number of repetitions (y) of the bonding unit II is within a range of 3 to 300. When the total number of repetitions (x+y) is within this range, since a $-C_7H_{15}$ portion of the bonding unit I covers the mercaptosilane of the bonding unit II, decrease of a scorching time can be inhibited and good reactivity with silica and the rubber component can be secured.

Examples of the usable silane coupling agent having the above-mentioned structure include NXT-Z30, NXT-Z45 and NXT-Z60 available from Momentive Performance Materials and the like. These silane coupling agents can be used alone, or can be used in combination of two or more thereof.

The content of the silane coupling agent having the above-mentioned structure is 3 to 15 parts by mass based on 100 parts by mass of silica. When the content of silane coupling agent is less than 3 parts by mass, an effect of coupling with silica is small, and therefore, there is a tendency that a rubber strength is decreased and abrasion resistance is deteriorated. When the content of silane coupling agent exceeds 15 parts by mass, there is a tendency that an effect compensating for increased cost cannot be obtained. The content of silane coupling agent is preferably not less than 4 parts by mass, more preferably not less than 5 parts by mass. On the other hand, the content of silane coupling agent is preferably not more than 12 parts by mass, more preferably not more than 10 parts by mass.

<Other compounding components>

In addition to the above-mentioned components, the rubber composition may comprise compounding agents conventionally used in rubber industries, for example, a plasticizer or oil, zinc oxide, stearic acid, antioxidants, sulfur, a vulcanization accelerator and the like.

Examples of the vulcanization accelerator include guanidine-, aldehyde amine-, aldehyde ammonia-, thiazole-, sulfenamide-, thiourea-, thiuram-, dithiocarbamate-, and xanthate-based vulcanization accelerators. These vulcanization accelerators may be used alone or may be used in combination of two or more thereof. When the rubber composition comprises the vulcanization accelerator, a content thereof based on 100 parts by mass of the rubber component is preferably not less than 0.3 part by mass, more preferably not less than 0.5 part by mass. On the other hand, the content of the vulcanization accelerator is preferably not more than 2.0 parts by mass, more preferably not more than 1.5 parts by mass. When the content of the vulcanization accelerator is within the above-mentioned range, a suitable crosslinking density tends to be obtained.

When the rubber composition comprises the plasticizer, a content thereof is not less than 1 part by mass, preferably not less than 3 parts by mass based on 100 parts by mass of the rubber component from the viewpoint of processability. Further, the content of the plasticizer is not more than 40 parts by mass, preferably not more than 20 parts by mass from the viewpoint of abrasion resistance and steering stability. Herein, the content of the plasticizer includes contents of oils contained in an oil-extended rubber and insoluble sulfur.

Examples of the oil include process oil, vegetable fats and oils, animal fats and oils and the like. When the rubber composition comprises the oil, a content thereof is preferably not less than 2 parts by mass, more preferably not less than 5 parts by mass based on 100 parts by mass of the rubber component from the viewpoint of processability. Further, the content of the oil is preferably not more than 40 parts by mass from the viewpoint of a load during a process.

<Preparation of a rubber composition>

For preparation of the rubber composition, a known method can be used. For example, the rubber composition

can be prepared by a method of kneading each of the above-mentioned components except the sulfur and the vulcanization accelerator using a Banbury mixer, a kneader or an open roll, and then adding the sulfur and the vulcanization accelerator to an obtained kneaded product, followed by further kneading a mixture and conducting vulcanization, or the like method.

<Tire tread>

The rubber composition is excellent in physical properties of a rubber such as abrasion resistance, tip cut resistance and further fuel efficiency, and therefore, is used preferably on a tire member, especially a tire tread.

<Tire>

The tire according to one embodiment of the present disclosure can be produced by a usual method using the above-mentioned rubber composition. Namely, the rubber composition is extrusion-processed into a shape of a tread at an unvulcanized stage, and further, the obtained extruded product is laminated with other tire members to form an unvulcanized tire on a tire molding machine by a usual forming method. The tire can be produced by heating and pressurizing this unvulcanized tire in a vulcanizer.

The tire can be used on any vehicles, and especially can be used suitably as tires for heavy duty vehicles such as a truck and a bus.

EXAMPLE

The present disclosure will be described based on Examples, but the present disclosure is not limited thereto only.

A variety of chemicals used in Examples and Comparative Examples will be explained below.
Natural rubber (NR): TSR20
Modified natural rubber (modified NR): one prepared in following Preparation Example 1
Styrene-butadiene rubber (SBR): one prepared in following Preparation Example 2
Butadiene rubber (BR): High-cis butadiene rubber (cis content: 97%, Mw: 610,000)
Carbon black: Carbon black ($N_2SA$: 181 $m^2/g$)

Silica 1: ULTRASIL VN3 ($N_2SA$: 175 $m^2/g$) manufactured by Evonik Degussa
Silica 2: ULTRASIL 9100GR ($N_2SA$: 212 $m^2/g$) manufactured by Evonik Degussa

Silane coupling agent (Coupling agent) 1: Si266 (bis(3-triethoxysilylpropyl)disulfide) manufactured by Evonik Degussa
Silane coupling agent (Coupling agent) 2: NXT-Z45 available from Momentive Performance Materials (a copolymer of the bonding unit I and the bonding unit II (bonding unit I: 55% by mole, bonding unit II: 45% by mole)
Zinc oxide: Zinc Oxide No. 2 manufactured by Mitsui Mining & Smelting Co., Ltd.
Stearic acid: Stearic acid beads manufactured by NOF Corporation Antioxidant: Nocrac 6c manufactured by OUCHI SHINKO CHEMICAL INDUSTRIAL CO., LTD.
Sulfur: Powdered sulfur available from Tsurumi Chemical Industry Co., Ltd.
Vulcanization accelerator: Nocceler NS manufactured by OUCHI SHINKO CHEMICAL INDUSTRIAL CO., LTD.

Preparation Example 1

(Preparation of modified NR)

After adjusting a solid content (DRC) of a natural rubber latex (field latex obtained from Titecs) to 30% (w/v), 10 g of Emal-E and 15 g of NaOH were added to 1,000 g of the natural rubber latex, followed by saponification at room temperature for 48 hours to obtain saponified natural rubber latex. After diluting this latex up to 15% (w/v) of DRC by adding water, formic acid was added to the diluted latex with slowly stirring to adjust a pH value to 4.0-4.5 and agglomerate the latex. An agglomerated rubber was pulverized and washed once with 1,000 ml of water, followed by 2-hour drying at 110°C to obtain a solid rubber (modified NR).

A nitrogen content, a phosphor content and a gel content of the solid rubber (modified NR) obtained in Preparation Example 1 and the above-mentioned natural rubber were measured by the following methods. The results are shown in Table 1.

(Measurement of nitrogen content)

A nitrogen content was measured using CHN CORDER MT-5 manufactured by Yanaco Bunseki Kogyo Kabushiki Kaisha. In the measurement, at first, a calibration curve for obtaining a nitrogen content was prepared using antipyrin as a reference material. Next, about 10 mg each of samples of the modified natural rubber obtained in Preparation Example 1 and TSR were weighed, and an average value of three measurements was obtained as a nitrogen content of the sample.

(Measurement of phosphor content)

A phosphor content was obtained using an ICP emission spectrometer (ICPS-8100 manufactured by Shimadzu Corporation). Further, 31P-NMR measurement of phosphorus was conducted for a component extracted with chloroform from a crude rubber and then refined and dissolved in a CDC13 solvent, by means of an NMR analysis apparatus (400 MHz, AV 400M, manufactured by Bruker Japan K.K.) assuming that a measured peak of a phosphorus atom in a 80% aqueous phosphoric acid solution is a reference point (0 ppm).

(Measurement of gel content)

To 70.00 mg of crude rubber sample cut into a size of 1 mm $\times$ 1 mm was added 35 ml of toluene, followed by allowing to stand in a dark place for one week. Next, the toluene solution was subjected to centrifuging to precipitate an insoluble gel content in toluene. Then supernatant soluble matters were removed and only the gel content was solidified with methanol, followed by drying and measuring a mass. A gel content (mass %) was obtained from the following equation.

$$\text{Gel content (mass \%)} = [\text{Mass (mg) after drying / Initial mass (mg) of sample}] \times 100$$

Table 1

| | Modified natural rubber (Preparation Example 1) | Natural rubber (TSR20) |
|---|---|---|
| Nitrogen content (mass %) | 0.36 | 3.80 |
| Phosphorus content (ppm) | 88 | 590 |
| Gel content (mass %) | 7 | 29.8 |

Preparation Example 2

(Preparation of SBR)

A 30 L stainless-steel polymerization reaction vessel was subjected to cleaning and drying, and an inside gas in the polymerization reaction vessel was replaced with dry nitrogen. Next, 15.3 kg of industrial hexane (density: 680 kg/m$^3$), 912 g of 1,3-butadiene, 288 g of styrene, 9.1 ml of tetrahydrofuran and 6.4 ml of ethylene glycol diethyl ether were poured into the polymerization reaction vessel. Then, a small amount of hexane solution of n-butyl lithium was poured into the polymerization reaction vessel as a scavenger for previously detoxicating impurities acting for devitalizing a polymerization initiator. Hexane solution of n-butyl lithium (content of n-butyl lithium: 19.2 mmol) were further poured into the polymerization reaction vessel, and the polymerization reaction was initiated. The polymerization reaction was conducted for three hours. During the polymerization reaction, a temperature inside the polymerization reaction vessel was adjusted to 65°C, the solution inside the polymerization reaction vessel was stirred at a stirring rate of 130 rpm, and 1,368 g of 1,3-butadiene and 432 g of styrene were fed continuously into the polymerization reaction vessel. A 20 ml THF solution containing 19.2 mmol of 2-[1-(2-hydroxy-3,5-di-t-pentylphenyl)ethyl]-4,6-di-t-pentylphenyl acrylate was poured into the polymerization reaction vessel, and the polymer solution was stirred for 15 minutes. Next, a 20 ml hexane solution containing 1.2 ml of methanol was poured into the polymerization reaction vessel, and the polymer solution was stirred for five minutes. Into the polymerization reaction vessel were poured 12.0 g of 2-tert-butyl-6-(3-tert-butyl-2-hydroxy-5-methylbenzyl)-4-methylphenyl acrylate (SUMILIZER GM available from Sumitomo Chemical Company, Limited) and

6.0 g of pentaerythrityltetrakis(3-laurylthiopropionate) (SUMILIZER TP-D available from Sumitomo Chemical Company, Limited), and next, the polymer solution was evaporated at room temperature for 24 hours and further dried at 55°C for 12 hours to obtain a polymer of a modified SBR.

Examples 1 to 5 and Comparative Examples 1 and 2

According to compounding formulations shown in Table 2, chemicals other than sulfur and a vulcanization accelerator were kneaded with a 1.7 L Banbury mixer for five minutes until a discharge temperature of 150°C is reached, and a kneaded product was obtained. Subsequently sulfur and a vulcanization accelerator were added to the kneaded product, followed by kneading with a biaxial open roll for five minutes until 80°C is reached, and an unvulcanized rubber composition was obtained.

<Vulcanized rubber sheet>

The obtained unvulcanized rubber composition was subjected to vulcanization at 170°C for ten minutes to produce a vulcanized rubber sheet.

<Test tire>

The obtained unvulcanized rubber composition was extruded and molded into the shape of a tread, and then laminated with other tire members on a tire molding machine, followed by vulcanization at 170°C for 10 minutes to manufacture a test tire (tire size: 195/65R15, tire for a passenger car).

<Low heat build-up property (viscoelasticity tests)>

A loss tangent tanδ at 30°C of the vulcanized rubber sheet was measured using a viscoelasticity spectrometer manufactured by IWAMOTO Quartz GlassLab Co., Ltd. under the conditions of a frequency of 10 Hz, an initial strain of 10% and a dynamic strain of 2%. Each tanδ was indicated with an index in accordance with the following equation, assuming the tanδ of Comparative Example 1 to be 100. The larger the index of low heat build-up property is, the more excellent the rolling resistance is. Herein, when the index of low heat build-up property is 90 or more, it indicates that the low heat build-up property is maintained without being deteriorated.

$$\text{(Index of low heat build-up property)} = \text{(Tan}\delta\text{ of Comparative Example 1)} / \text{(Tan}\delta\text{ of each formulation (30°C))} \times 100$$

<Tip cut resistance>

Rubber test pieces obtained from the treads of the test tires were subjected to a tensile test according to JIS K 6251 "Vulcanized Rubber and Thermoplastic Rubber - Method of Obtaining Tensile Characteristics", to measure the elongation at break EB (%). EB of each formulation was indicated with an index in accordance with the following equation, assuming the elongation at break of Comparative Example 1 to be 100. The larger the index is, the higher the rubber strength is and the more excellent the tip cut resistance is.

$$\text{(Index of tip cut resistance)} = \text{(EB of each formulation)} / \text{(EB of Comparative Example 1)} \times 100$$

<Abrasion resistance>

An amount of wear of the vulcanized rubber sheet was measured using an LAT tester under the conditions of a room temperature, a load of 1.0 kgf and a slip rate of 30%. Abrasion resistance was indicated with an index in accordance with the following equation, assuming the elongation at break of Comparative Example 1 to be 100.

$$\text{Index of abrasion resistance} = (\text{Amount of wear of Comparative Example 1}) / (\text{Amount of wear of each formulation}) \times 100$$

<Running performance, durability (evaluation on vehicle)>

The above-mentioned test tires were mounted with rims (rim size: 18 × 8J) with an inner pressure of 230 kPa and mounted on four wheels of a car (Land Cruiser 200). The car was run 3 rounds of an off-road test course (0.3 km per 1 round), and running performance and durability were evaluated by a sensorial evaluation by index of a test driver assuming the result of Comparative Example 1 to be 100, and an average value of running performance and durability was calculated. The larger the index is, the more excellent the overall evaluation of running performance and durability is.

Table 2

| | Comparative Example | | Example | | | | |
|---|---|---|---|---|---|---|---|
| | 1 | 2 | 1 | 2 | 3 | 4 | 5 |
| Compounding amount (part by mass) | | | | | | | |
| NR | 55 | 55 | - | - | - | - | - |
| Modified NR | - | - | 55 | 40 | 75 | 55 | 55 |
| SBR | 25 | 25 | 25 | 35 | 5 | 25 | 25 |
| BR | 20 | 20 | 20 | 25 | 20 | 20 | 20 |
| CB | 50 | 50 | 50 | 50 | 50 | 65 | 15 |
| Silica 1 | 25 | - | - | - | - | - | - |
| Silica 2 | - | 25 | 25 | 25 | 25 | 10 | 60 |
| Coupling agent 1 | 1.5 | 1.5 | - | - | - | - | - |
| Coupling agent 2 | - | - | 1.5 | 1.5 | 1.5 | 1.5 | 1.5 |
| Zinc oxide | 2 | 2 | 2 | 2 | 2 | 2 | 2 |
| Stearic acid | 2.5 | 2.5 | 2.5 | 2.5 | 2.5 | 2.5 | 2.5 |
| Antioxidant | 2 | 2 | 2 | 2 | 2 | 2 | 2 |
| Sulfur | 1.4 | 1.4 | 1.4 | 1.4 | 1.4 | 1.4 | 1.4 |
| Vulcanization accelerator | 1.2 | 1.2 | 1.2 | 1.2 | 1.2 | 1.2 | 1.2 |
| Evaluation | | | | | | | |
| Low heat build-up property (30°C tanδ) | 100 | 80 | 100 | 90 | 125 | 90 | 110 |
| Tip cut resistance (high speed EL) | 100 | 105 | 110 | 100 | 120 | 120 | 105 |
| Abrasion resistance (LAT) | 100 | 105 | 115 | 110 | 120 | 115 | 110 |
| On-vehicle evaluation (Running performance, durability) | 100 | 90 | 100 | 105 | 110 | 105 | 110 |

According to the present disclosure, a tire tread being excellent in abrasion resistance and tip cut resistance and a tire having the tread can be provided.

A tire tread being excellent in abrasion resistance and tip cut resistance and a tire having the tire tread are provided. The tire tread is composed of a rubber composition comprising: 100 parts by mass of a rubber component comprising 40 to 75% by mass of a modified natural rubber having a nitrogen content of 0.50% by mass or less and 5 to 35% by mass of a styrene-butadiene rubber, 10 to 60 parts by mass of silica having a nitrogen adsorption specific surface area of 180 $m^2/g$ or more, and 3 to 15 parts by mass of a given silane coupling agent based on 100 parts by mass of silica.

## Claims

**1.** A tire tread composed of a rubber composition comprising:

100 parts by mass of a rubber component comprising 40 to 75% by mass of a modified natural rubber having

a nitrogen content of 0.50% by mass or less and 5 to 35% by mass of a styrene-butadiene rubber,
10 to 60 parts by mass of silica having a nitrogen adsorption specific surface area, measured by a BET method in accordance with ASTM D3037-81, of 180 $m^2/g$ or more, and
3 to 15 parts by mass of a silane coupling agent based on 100 parts by mass of silica, wherein the silane coupling agent being a compound comprising a bonding unit I represented by the following formula (1) and a bonding unit II represented by the following formula (2).

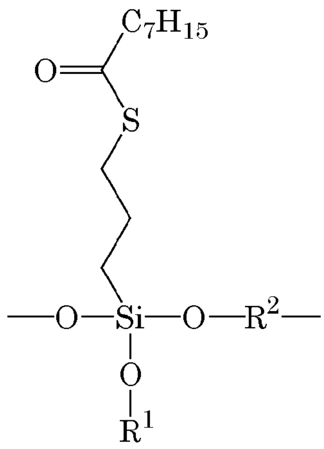
(1)

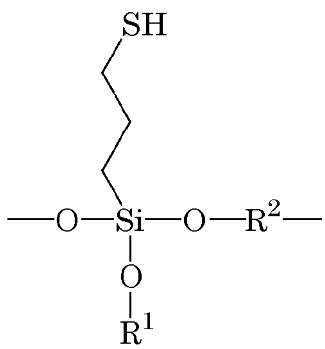
(2)

In each of the formulae, $R^1$ represents hydrogen, halogen, a branched or non-branched alkyl group having 1 to 30 carbon atoms, a branched or non-branched alkenyl group having 2 to 30 carbon atoms, a branched or non-branched alkynyl group having 2 to 30 carbon atoms, or the alkyl group in which hydrogen at its terminal has been replaced by hydroxyl or carboxyl, $R^2$ represents a branched or non-branched alkylene group having 1 to 30 carbon atoms, a branched or non-branched alkenylene group having 2 to 30 carbon atoms, or a branched or non-branched alkynylene group having 2 to 30 carbon atoms,or $R^1$ and $R^2$ may form a ring structure.

**2.** The tire tread of claim 1, wherein the rubber component further comprises 0 to 45% by mass of a butadiene rubber.

**3.** The tire tread of claim 1 or 2, wherein the rubber composition further comprises carbon black.

**4.** The tire tread of claim 3, wherein a nitrogen adsorption specific surface area of the carbon black, measured in accordance with JIS K6217-2, Method A, is 80 $m^2/g$ or more.

**5.** The tire tread of any one of claims 1 to 4, wherein the modified natural rubber is a saponified natural rubber.

**6.** A tire having the tire tread of any one of claims 1 to 5.

## Patentansprüche

**1.** Reifenlauffläche, die aus einer Kautschukzusammensetzung zusammengesetzt ist, die umfasst
100 Massenteile einer Kautschukkomponente, die 40 bis 75 Massen-% eines modifizierten Naturkautschuks mit

einem Stickstoffgehalt von 0,50 Massen-% oder weniger und 5 bis 35 Massen-% eines Styrol-ButadienKautschuks umfasst,

10 bis 60 Masseteile Siliciumdioxid mit einer Stickstoffadsorptionspezifischen Oberfläche, gemessen nach der BET-Methode gemäß ASTM D3037-81, von 180 $m^2/g$ oder mehr, und

3 bis 15 Massenteile eines Silan-Kupplungsmittels auf der Basis von 100 Massenteilen an Siliciumdioxid, wobei das Silan-Kupplungsmittel eine Verbindung ist, die eine durch die folgende Formel (1) dargestellte Bindungseinheit I und eine durch die folgende Formel (2) dargestellte Bindungseinheit II umfasst.

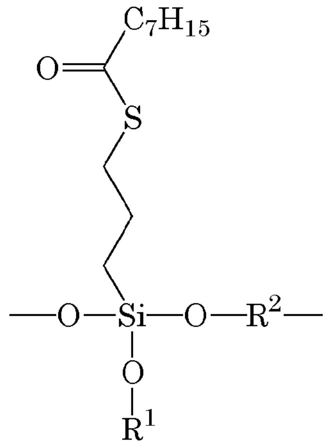
(1)

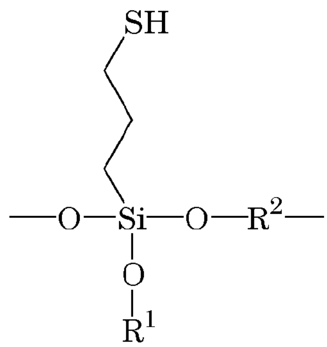
(2)

In jeder der Formeln stellt $R^1$ Wasserstoff, Halogen, eine verzweigte oder unverzweigte Alkylgruppe mit 1 bis 30 Kohlenstoffatomen, eine verzweigte oder unverzweigte Alkenylgruppe mit 2 bis 30 Kohlenstoffatomen, eine verzweigte oder unverzweigte Alkinylgruppe mit 2 bis 30 Kohlenstoffatomen oder die Alkylgruppe dar, in der Wasserstoff an deren Ende durch Hydroxyl oder Carboxyl ersetzt wurde, stellt $R^2$ eine verzweigte oder unverzweigte Alkylengruppe mit 1 bis 30 Kohlenstoffatomen, eine verzweigte oder unverzweigte Alkenylengruppe mit 2 bis 30 Kohlenstoffatomen oder eine verzweigte oder unverzweigte Alkinylengruppe mit 2 bis 30 Kohlenstoffatomen dar, oder können $R^1$ und $R^2$ eine Ringstruktur bilden.

**2.** Reifenlauffläche nach Anspruch 1, wobei die Kautschukkomponente ferner 0 bis 45 Massen-% eines Butadienkautschuks umfasst.

**3.** Reifenlauffläche nach Anspruch 1 oder 2, wobei die Kautschukzusammensetzung ferner Carbon Black enthält.

**4.** Reifenlauffläche nach Anspruch 3, wobei die Stickstoffadsorptionspezifische Oberfläche des Carbon Blacks, gemessen gemäß JIS K6217-2, Verfahren A, 80 $m^2/g$ oder mehr beträgt.

**5.** Reifenlauffläche nach einem der Ansprüche 1 bis 4, wobei der modifizierte Naturkautschuk ein verseifter Naturkautschuk ist.

**6.** Reifen mit der Reifenlauffläche nach einem der Ansprüche 1 bis 5.

## Revendications

**1.** Bande de roulement composée d'une composition de caoutchouc comprenant :

100 parties en masse d'un composant caoutchouc comprenant 40 à 75 % en masse d'un caoutchouc naturel modifié ayant une teneur en azote de 0,50 % en masse ou moins et 5 à 35 % en masse d'un caoutchouc de styrène-butadiène,

10 à 60 parties en masse de silice ayant une surface spécifique par adsorption d'azote, mesurée par un procédé BET conformément à la norme ASTM D3037-81, de 180 $m^2/g$ ou plus, et

3 à 15 parties en masse d'un agent de couplage au silane, pour 100 parties en masse de silice, lequel agent de couplage au silane est un composé comprenant un motif de liaison I représenté par la formule (1) qui suit et un motif de liaison II représenté par la formule (2) qui suit :

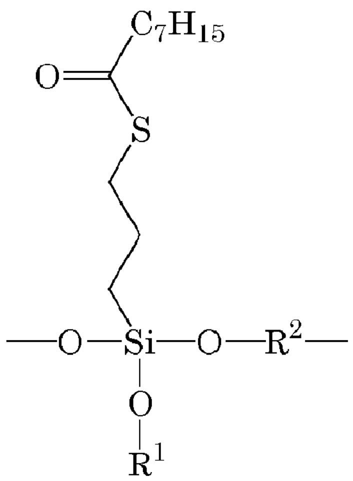

(1)

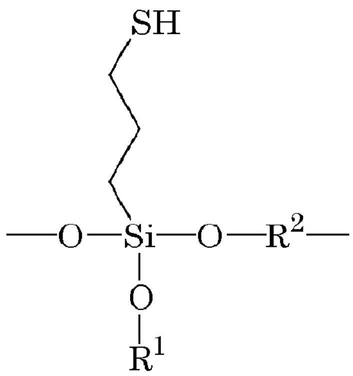

(2)

dans chacune des formules, $R^1$ représente l'hydrogène, un halogène, un groupe alkyle ramifié ou non ramifié ayant 1 à 30 atomes de carbone, un groupe alcényle ramifié ou non ramifié ayant 2 à 30 atomes de carbone, un groupe alcynyle ramifié ou non ramifié ayant 2 à 30 atomes de carbone, ou bien le groupe alkyle dans lequel l'hydrogène à son extrémité a été remplacé par hydroxyle ou carboxyle, $R^2$ représente un groupe alkylène ramifié ou non ramifié ayant 1 à 30 atomes de carbone, un groupe alcénylène ramifié ou non ramifié ayant 2 à 30 atomes de carbone, ou un groupe alcynylène ramifié ou non ramifié ayant 2 à 30 atomes de carbone, ou bien $R^1$ et $R^2$ peuvent former une structure cyclique.

**2.** Bande de roulement selon la revendication 1, dans laquelle le composant caoutchouc comprend en outre 0 à 45 % en masse d'un caoutchouc de butadiène.

**3.** Bande de roulement selon la revendication 1 ou 2, dans laquelle la composition de caoutchouc comprend en outre du noir de carbone.

**4.** Bande de roulement selon la revendication 3, dans laquelle la surface spécifique par adsorption d'azote du noir de

carbone, mesurée conformément à la norme JIS K6217-2, Méthode A, est de 80 $m^2/g$ ou plus.

5. Bande de roulement selon l'une quelconque des revendications 1 à 4, dans laquelle le caoutchouc naturel modifié est un caoutchouc naturel saponifié.

6. Pneu ayant la bande de roulement de l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000344955 A
- JP 2015124368 A
- JP 2010138359 A
- JP 2010174169 A
- JP 2014019841 A